# EUROPÄISCHE PATENTSCHRIFT

(11) **EP 3 117 025 B1**
(45) Veröffentlichungstag und Bekanntmachung des Hinweises auf die Patenterteilung: **24.10.2018**
(21) Anmeldenummer: 15710431.6
(22) Anmeldetag: 06.03.2015
(51) Int. Cl.: C23C 30/00, F16D 65/12, F16D 69/02

(54) **BREMSSCHEIBENBESCHICHTUNG AUS EINER EISENLEGIERUNGSZUSAMMENSETZUNG UND VERFAHREN ZUR HERSTELLUNG DERSELBEN**
AN IRON ALLOY BRAKE DISC COATING AND PROCESS FOR ITS MANUFACTURE
REVÊTEMENT D'UN DISQUE DE FREIN D'UN ALLIAGE DE FER ET SON PROCÉDÉ DE FABRICATION

(30) Priorität: 11.03.2014 DE 102014003581; 29.03.2014 DE 102014004616
(43) Veröffentlichungstag der Anmeldung: 18.01.2017
(73) Patentinhaber: Daimler AG, 70327 Stuttgart (DE)
(72) Erfinder: HAUG, Tilmann, 89264 Weißenhorn (DE)
(74) Vertreter: JENSEN & SON
(86) Internationale Anmeldenummer: PCT/EP2015/000518
(87) Internationale Veröffentlichungsnummer: WO 2015/135639

(56) Entgegenhaltungen:
- DE-A1-102006 004 156
- US-A1- 2007 144 839

## Beschreibung

Die Erfindung betrifft eine Eisenlegierungszusammensetzung als Verschleißschutzbeschichtung auf einer Bremsscheibe, eine verschleißschutzbeschichtete Bremsscheibe und die Herstellung derselben.
Aus WO 03/104513 A1 ist ein verschleißfestes, beschichtetes, im Wesentlichen metallisches Fahrzeugbauteil mit einer Reibfläche, beispielsweise eine Bremsscheibe, bekannt. Die Reibfläche wird durch eine verschleißfeste Deckschicht gebildet, die im Wesentlichen aus Molybdän besteht, wobei eine typische Zusammensetzung mehr als 99% Molybdän aufweist. Eine Bindungsschicht wird auf das Basissubstrat des Bauteils aufgebracht, um die Deckschicht mit dem Basissubstrat zu verbinden. Ein Nachteil bei der Verarbeitung von Molybdän ist allerdings dessen hohe Schmelztemperatur und ebenso die hohen Kosten für Molybdän.
Daher wird bei dem Fahrzeugbauteil mit Reibfläche aus der WO 2007/043961 A1 die verschleißfeste Deckschicht aus einer Legierung gebildet, die zwischen 50 und 99% Molybdän enthält, wobei der Rest aus zumindest einem der folgenden Elemente besteht: Aluminium, Bor, Kohlenstoff, Chrom, Kobalt, Lanthan, Mangan, Nickel, Niob, Sauerstoff, Silizium, Tantal, Wolfram, Yttrium. Diese Legierung hat eine Liquidustemperatur, die beträchtlich niedriger ist, als die von Molybdän, so dass die Legierung beim thermischen Spritzen vollständig oder fast vollständig verflüssigt ist, wodurch die Bildung einer nichtporösen Deckschicht gefördert wird. Deren Dicke liegt bei etwa 25 bis 600 µm, vorzugsweise 300 µm. Eine Verbindungsschicht zwischen der Molybdändeckschicht und dem Substrat umfasst im Wesentlichen einen Hauptanteil Nickel und einen geringeren Anteil Aluminium. Deren Dicke kann zwischen 0 und 100 µm, vorzugsweise bei etwa 50 µm liegen.

Die DE 10 2008 035 849 A1 beschreibt ein Verfahren zur Beschichtung von Bremsflächen von Stahl-Bremsscheiben, bei dem eine verschleißfeste Beschichtung durch thermisches Spritzen auf die aufgerauten Bremsflächen aufgebracht wird. Ein zum Hochgeschwindigkeitsflammspritzen verwendeter Spritzwerkstoff ist ein Keramik-Metall-Verbundwerkstoff aus Wolframcarbid und einem Metall-Bestandteil, der entweder aus Kobalt, Nickel oder einer Kobalt- oder Nickellegierung besteht. Im Lichtbogenspritzverfahren kann auf die Bremsflächen der Stahl-Bremsscheibe eine Beschichtung aus Fe 18 Cr 8 Ni 2 Mn, Fe 13 Cr 0,5 Si oder aus legiertem Kohlenstoffstahl mit einem Kohlenstoffgehalt von etwa 0,35% sowie weiteren Legierungsbestandteilen in Form von Si, Ni, Mn, P (Spuren) und Schwefel (Spuren) aufgebracht werden.

EP 1 336 054 B1 beschreibt eine Bremsscheibe und ein Verfahren zu deren Herstellung. Die Bremsscheiben aus einem Eisengusswerkstoff, beispielsweise Grauguss mit einem Kohlenstoffgehalt von 3,7 - 4,0 %, weisen an zumindest einer der axialen Reibflächen eine oxidations- und verschleißresistente metallische, nichtkeramische Spritzgussbeschichtung aus einem härteren Metall auf, beispielsweise einem unlegierten oder legierten Stahl, das Karbide und Oxide im Gefüge aufweist. Die Spritzgussbeschichtung kann durch Flamm-, Lichtbogen- oder Plasmaspritzen erzeugt werden. Die verwendete Stahllegierung kann Cr enthalten, dessen Gehalt in der Beschichtung zwischen 10 und 20% liegen kann. Eine Zusammensetzung des Beschichtungsstahls weist 16% Cr; 0,44% Ni; 0,43% Mn; 1,01% Mo und 0,36% C auf.

Die deutsche Patentanmeldung DE 10 2006 004 156 A1 beschreibt eine Verbundbremsscheibe aus Grauguss-Tragscheibe und Reibringen, die zumindest den wesentlichen, einem Bremsbelag gegenüberliegenden Bereich abdecken, wobei die Reibringe durch eine thermische Spritzschicht aus Cr/Ni-Stahl mit mindestens 16% Cr und mindestens 10% Ni gebildet sind.

Ausgehend von diesem Stand der Technik ist es die Aufgabe der vorliegenden Erfindung, eine verbesserte Verschleißschutzbeschichtung für die Bremsflächen einer Bremsscheibe bereitzustellen und dabei eine Bremsscheibe zu schaffen, deren Reibflächen eine hohe Härte mit ebenfalls erhöhter Abriebfestigkeit verbinden, so dass die unerwünschte Bildung von Feinstaub beim Bremsen reduziert wird.

Diese Aufgabe wird durch eine Verschleißschutzbeschichtung auf einer Bremsscheibe mit den Merkmalen der Ansprüche 1 oder 2 gelöst.

Die weitere Aufgabe der Erfindung, eine Bremsscheibe zu schaffen, deren Reibflächen eine hohe Härte mit erhöhter Abriebfestigkeit verbinden, so dass die Bildung von Feinstaub beim Bremsen reduziert wird, wird durch eine Bremsscheibe mit den Merkmalen des Anspruchs 3 gelöst.
Beschreibungen des Verfahrens zur Herstellung sind in den Ansprüchen 4 und 5 ausgeführt.

Eine Eisenlegierungszusammensetzung, die zur Bildung einer reibbeständigen Verschleißschutzschicht auf den Bremsflächen bzw. Reibflächen aus Aluminiumlegierung oder alternativ aus Grauguss einer Bremsscheibe vorgesehen ist, weist 0,5 bis 2 Gew.-% C und 3 bis 13 Gew.-% Al, wahlweise 0,5 bis 5 Gew.% Cr und/ oder 0,05 bis 0,5 Gew.% Si, 0.5 bis 5 Gew.% Mn, und/oder 0,5 bis 5 Gew.% Ni, und/oder jeweils 0,1 bis 3 Gew.% W, V, Nb und/oder B und einen die 100 Gew.-% ergänzenden Restanteil Fe mit den unvermeidlichen Verunreinigungsspuren auf. Mit einer aus dieser Legierungszusammensetzung geschaffenen Verschleißschutzschicht auf einer Bremsscheibe kann der Bremsscheibenverschleiß reduziert werden. Die Verschleißschutzschicht ist dabei die oberste Materialschicht der Bremsscheibe im Bereich der Reibfläche. Die unter der Verschleißschutzschicht angeordnete Bremsscheibe kann dabei aus mehreren Materiallagen aufgebaut sein, beispielsweise aus einem Basismaterial und einer Haft-oder Korrosionsschutzschicht aus einem anderen Material. Handelt es sich bei der Bremsscheibe um eine Leichtmetall, oder Aluminiumlegierungs-Bremsscheibe, so ermöglicht die Beschichtung aus dieser Zusammensetzung eine deutliche Reduktion des Bremsscheibengewichts, da der Basiskörper der Bremsscheibe schmaler ausgelegt werden kann.
Die Eisenlegierungszusammensetzung weist 0,5 bis 2 Gew.-% C und 3 bis 13 Gew.-% Al ferner 0,5 bis 5 Gew.-% Cr und/oder 0,05 bis 0,5 Gew.-% Si auf. Der Anteil an Cr und Si führt unter anderem zur vorteilhaften Bildung von Hartphasen in der Beschichtungslegierung. Der Restanteil ist Fe mit den typischen Verunreinigungsspuren
in Stählen. Eine solche Zusammensetzung hat den Vorteil, dass nur gut verfügbare, kostengünstige Legierungselemente verwendet werden. Auf die teuren Mo oder Ni wird gezielt verzichtet.
Um die Verformbarkeit der Zusammensetzung zu verbessern, können die zuvor genannten Eisenlegierungszusammensetzungen zusätzlich noch 0,5 bis 5 Gew.-% Mn aufweisen und alternativ oder zusätzlich 0,5 bis 5 Gew.-% Ni. Durch die Ni-Zugabe wird die Duktilität der Legierungsmatrix verbessert.

Zusätzlich können die genannten Eisenlegierungszusammensetzungen Hartstoffbildner wie z. B. W, V, Nb, B jeweils im Bereich von 0,1 bis 3 Gew.-% aufweisen.

Anders als bislang, wobei Serienbremsscheiben erheblichem Verschleiß unterliegen und mit dem Bremsbelag Bremsfeinstaub erzeugen, der sich auf der Felge optisch ungünstig niederschlägt und schwer entfernbar ist, zeigt sich eine aus dieser Zusammensetzung gebildete Verschleißschutzschicht im Wesentlichen dauerhaft abriebfest. Durch die erhöhte Abriebfestigkeit kann die Bildung von Feinstaub beim Bremsen reduziert werden. Zudem weist eine mit der erfindungsgemäßen Eisenlegierungszusammensetzung beschichtete Bremsscheibe eine deutlich erhöhte Lebensdauer mit gleichbleibender Bremswirkung auf.

So lässt sich die Eisenlegierungszusammensetzung zur Bildung einer Verschleißschutzschicht auf Bremsscheiben-Bremsflächen verwenden, wobei die Eisenlegierungszusammensetzung durch thermisches Spritzen auf die Bremsflächen aufgebracht wird.

Die thermisch gespritzte Eisenlegierung kann vor allem die folgenden Phasen aufweisen: α-Fe(Al, Si, Mn), Fe₄₋ₓAlₓC_{y} und (FeCr)₃C. Dabei handelt es sich um einen hohen Anteil an Hartstoffphasen, die eine extrem gute Verschleißbeständigkeit erzeugen. Das Element Al und dessen Verbindungen in der Beschichtung weisen eine sehr gute Oxidationsstabilität auf, so dass eine sehr hohe Stabilität gegen Korrosion erreicht wird. Das beim Bremsen in der Hitze gebildete Aluminiumoxid wirkt dem Fortschreiten der Korrosion in die Schicht entgegen.

Der Ausdehnungskoeffizient der Legierungszusammensetzung liegt auf dem Niveau von Grauguss. So werden thermische Spannungen reduziert, wenn kostengünstig Grauguss als Bremsscheibensubstrat bzw. Basiskörper eingesetzt wird.

Die Bremsscheibe aus Aluminium bzw. einer Aluminiumlegierung oder Grauguss weist erfindungsgemäß eine Verschleißschutzschicht aus einer erfindungsgemäßen Eisenlegierungszusammensetzung auf. Die so beschaffene Bremsscheibe zeichnet sich durch erhöhte Abriebfestigkeit mit der verbundenen geringeren Feinstaubbildung und erhöhten Lebensdauer bei gleichzeitig guter Oxidations- und Korrosionsbeständigkeit aus. Gegebenenfalls kann zwischen dem Basismaterial der Bremsscheibe und der Verschleißschutzschicht eine Zwischenschicht aufgebracht werden. Hierbei handelt es sich um eine Haftschicht oder Korrosionsschutzschicht. Bevorzugtes Material für die Zwischenschicht sind Ni oder Ni-Legierungen.

Ein Verfahren zur Herstellung einer mit einer Verschleißschutzschicht beschichteten Bremsscheibe beginnt mit dem Herstellen eines Bremsscheibengrundkörpers, woraufhin die zu beschichtende(n) Bremsfläche(n) aufgeraut werden, um eine bessere Haftung der nachfolgend aufgespritzten Schutzschicht an dem Bremsscheibengrundkörper zu ermöglichen. Nach dem Aufbringen der Verschleißschutzschicht aus einer erfindungsgemäßen Eisenlegierungszusammensetzung auf die aufgeraute(n) Bremsfläche(n) mittels eines thermischen Spritzverfahrens folgt das thermische und/oder mechanische Nachbehandeln der Verschleißschutzschicht zur Verbesserung der Duktilität und Verdichtung der Verschleißschutzschicht. Gegebenenfalls kann zwischen dem Basismaterial der Bremsscheibe und der Verschleißschutzschicht eine Zwischenschicht aufgebracht werden. Hierbei handelt es sich um eine Haftschicht oder Korrosionsschutzschicht. Die Zwischenschicht, insbesondere im Falle einer Ni-Legierung, kann galvanisch oder als Spritzschicht aufgetragen werden.

Bei der thermischen und/oder mechanischen Nachbehandlung kann es sich um eine thermomechanische Nachbehandlung wie Hämmern oder Walzen der aufgebrachten Beschichtung bei erhöhten Temperaturen im Bereich zwischen 800 und 950°C, vorzugsweise bei Temperaturen von 850 bis 900°C handeln. Alternativ oder zusätzlich kann abschließend Auslagerung bei einer Temperatur im Bereich von 850 bis 950°C, vorzugsweise bei ca. 900 °C, über eine Zeitspanne zwischen 0,5 und 3 Stunden, vorzugsweise 1 Stunde zur (weiteren) Steigerung der Duktilität erfolgen, da durch diesen Temperschritt eine Verrundung/Einformung der spröden Hartstoffphasen erfolgt.

Der Bremsscheibengrundkörper kann kostengünstig aus Grauguss oder in Leichtbauweise aus Aluminiumguss hergestellt werden. Zum Aufrauen der Brems- bzw. Reibflächen vor dem Beschichten können vorzugsweise mechanische Verfahren eingesetzt werden, beispielsweise Partikelstrahlen (z. B. Sandstrahlen), Hochdruckwasserstrahlen oder unter Verwendung eines Schneidwerkzeugs mit definierter Schneide, die vorzugsweise auch Hinterschnitte erzeugt, so dass die nachfolgend aufgespritzte Beschichtung sich mit dem Bremsscheibengrundkörper verklammert und so die Haftung der Verschleißschutzschicht weiter verbessert wird.

Als thermische Spritzverfahren kommen verschiedene Verfahren wie z. B. atmosphärisches Pulverplasma-Spritzen, Flammspritzen, Hochgeschwindigkeitsflammspritzen oder Lichtbogendrahtspritzen in Frage, wobei atmosphärisches Pulverplasma-Spritzen bevorzugt sein kann, wenn die Eisenlegierungszusammensetzung als Pulver vorliegt. Liegt allerdings die Eisenlegierungszusammensetzung als Draht vor, ist aufgrund der erreichbaren Homogenität der Spritzschicht und der Kosten das Lichtbogendrahtspritzen bevorzugt.

## Patentansprüche

1. Verschleißschutzschicht aus Eisenlegierungszusammensetzung auf einer Bremsscheiben-Bremsfläche aus Aluminiumlegierung,
**dadurch gekennzeichnet, dass**
die Zusammensetzung
0,5 bis 2 Gew.-% C, 3 bis13 Gew.-% Al und
wahlweise
0,5 bis 5 Gew.-% Cr und/oder 0,05 bis 0,5 Gew.-% Si,
0,5 bis 5 Gew.-% Mn, und/oder 0,5 bis 5 Gew.-% Ni, und/oder jeweils 0,1 bis 3 Gew.-% W, V, Nb und/oder B
und einen die 100 Gew.-% ergänzenden Restanteil Fe und Stahl-typische Verunreinigungsspuren aufweist.

2. Verschleißschutzschicht aus Eisenlegierungszusammensetzung auf einer Bremsscheiben-Bremsfläche aus Grauguss,
**dadurch gekennzeichnet, dass**
die Zusammensetzung
0,5 bis 2 Gew.-% C,
3 bis13 Gew.-% Al und
wahlweise
0,5 bis 5 Gew.-% Cr und/oder 0,05 bis 0,5 Gew.-% Si,
0,5 bis 5 Gew.-% Mn, und/oder 0,5 bis 5 Gew.-% Ni, und/oder jeweils 0,1 bis 3 Gew.-% W, V, Nb und/oder B
und einen die 100 Gew.-% ergänzenden Restanteil Fe und Stahl-typische Verunreinigungsspuren aufweist.

3. Bremsscheibe, bei der zumindest eine Bremsfläche mit einer Verschleißschutzschicht nach zumindest einem der Ansprüche 1 oder 2 beschichtet ist, **dadurch gekennzeichnet, dass**
eine Zwischenschicht, insbesondere auf der Basis einer Ni-Legierung, zwisch n Bremsscheibengrundkörper und der Verschleißschutzschicht vorliegt

4. Verfahren zur Herstellung einer Bremsscheibe, bei der zumindest eine Bremsfläche mit einer Verschleißschutzschicht nach zumindest einem der Ansprüche 1 bis 3 beschichtet ist,
umfassend die Schritte
- Herstellen eines Bremsscheibengrundkörpers,
- Aufrauen der zu beschichtenden Bremsfläche,
- Aufbringen der Verschleißschutzschicht aus einer
Eisenlegierungszusammensetzung nach zumindest einem der Ansprüche 1 bis 3 auf die aufgeraute Bremsfläche mittels eines thermischen Spritzverfahrens,
- thermisch und/oder mechanisch Nachbehandeln der Verschleißschutzschicht zur Verbesserung der Duktilität
durch
die folgende thermische und/oder mechanische Nachbehandlung
- Hämmern oder Walzen der Beschichtung, bevorzugt bei Temperaturen in einem Bereich von 800 bis 950°C, bevorzugt von 850 bis 900°C, und/oder
- eine anschließende Auslagerung bei einer Temperatur im Bereich von 850°C bis 950°C, bevorzugt bei 900°C, über eine Zeitspanne von 0,5 bis 3 Stunden, bevorzugt 1 Stunde, umfasst.

5. Verfahren nach Anspruch 4,
wobei
- der Bremsscheibengrundkörper aus Grauguss oder Aluminiumguss hergestellt wird,
- das Aufrauen mittels Partikelstrahlen, Hochdruckwasserstrahlen oder mittels Schneidwerkzeug unter Erzeugung von Hinterschnitten erfolgt;
- das thermische Spritzverfahren aus den Verfahren atmosphärisches Pulverplasma-Spritzen (APS), Flammspritzen, Hochgeschwindigkeitsflammspritzen oder Lichtbogendrahtspritzen ausgewählt ist, wobei atmosphärisches Pulverplasma-Spritzen bevorzugt ist, wenn die Eisenlegierungszusammensetzung als Pulver vorliegt, und Lichtbogendrahtspritzen bevorzugt ist, wenn die Eisenlegierungszusammensetzung als Draht vorliegt.

## Claims

1. Antiwear layer of an iron alloy composition on a brake disc brake contact surface made of an aluminium alloy,
**characterised in that**
the composition comprises
0.5 to 2 % w/w C,
3 to 13 % w/w Al and
optionally
0.5 to 5 % w/w Cr and/or 0.05 to 0.5 % w/w Si,
0.5 to 5 % w/w Mn and/or 0.5 to 5 % w/w Ni and/or
0.1 to 3 % w/w W, V, Nb and/or B each
and a rest of Fe- and steel-typical traces of contaminant to complete the 100 % w/w.

2. Antiwear layer of an iron alloy composition on a brake disc brake contact surface made of grey cast iron,
**characterised in that**
the composition comprises
0.5 to 2 % w/w C,
3 to 13 % w/w Al and
optionally
0.5 to 5 % w/w Cr and/or 0.05 to 0.5 % w/w Si,
0.5 to 5 % w/w Mn and/or 0.5 to 5 % w/w Ni and/or
0.1 to 3 % w/w W, V, Nb and/or B each
and a rest of Fe- and steel-typical traces of contaminant to complete the 100 % w/w.

3. Brake disc which has at least one brake contact surface coated with an antiwear layer according to claim 1 or 2,
**characterised in that**
an intermediate layer, based on an Ni alloy in particular, is provided between the brake disc base body and the antiwear layer.

4. Method for producing a brake disc which has at least one brake contact surface coated with an antiwear layer according to one or more of claims 1 to 3,
comprising the steps of
- the production of a brake disc base body,
- the roughening of the brake contact surface to be machined,
- the application of the antiwear layer of an iron alloy composition according to one or more of claims 1 to 3 to the roughened brake contact surface by means of a thermal spraying process,
- the thermal and/or mechanical after-treatment for the improvement of its ductility
by
the following thermal and/or mechanical after-treatment
- the peening or rolling of the coating at temperatures in a range of 800 to 950°C, preferably 850 to 900°C and/or
- a subsequent ageing at a temperature in a range of 850 to 950°C, preferably at 900°C, over a period of 0.5 to 3 hours, preferably 1 hour.

5. Method according to claim 4,
wherein
- the brake disc base body is produced from grey cast iron or cast aluminium,
- the roughening process is performed by means of particle blasting, high-pressure water jet blasting or by means of a cutting tool while producing undercuts,
- the thermal spraying process is selected from the following:
atmospheric powder plasma spraying (APS), flame spraying, high-speed flame spraying or arc wire spraying, wherein atmospheric powder plasma spraying is preferred if the iron alloy composition is present in the form of a powder and arc wire spraying is preferred if the iron alloy composition is present in the form of wire.

## Revendications

1. Couche de protection contre l'usure constituée d'une composition d'alliage de fer sur une surface de frein à disque en alliage d'aluminium, **caractérisée en ce que** la composition présente entre 0,5 et 2 % en poids de C, entre 3 et 13 % en poids d'Al et sélectivement entre 0,5 et 5 % en poids de Cr et/ou entre 0,05 et 0,5 % en poids de Si, entre 0,5 et 5 % en poids de Mn, et/ou entre 0,5 et 5 % en poids de Ni et/ou respectivement entre 0,1 et 3 % en poids de W, V, Nb et/ou de B et une proportion résiduelle de Fe pour compléter les 100 % en poids et des traces de fer normales.

2. Couche de protection contre l'usure constitué d'une composition d'alliage de fer sur une surface de frein à disque en fonte grise, **caractérisée en ce que** la composition présente entre 0,5 et 2 % en poids de C, entre 3 et 13 % en poids d'Al et sélectivement entre 0,5 et 5 % en poids de Cr et/ou entre 0,05 et 0,5 % en poids de Si, entre 0,5 et 5 % en poids de Mn, et/ou entre 0,5 et 5 % en poids de Ni et/ou respectivement entre 0,1 et 3 % en poids de W, V, Nb et/ou B et une proportion résiduelle de Fe pour compléter les 100 % en poids et des traces de fer normales.

3. Frein à disque dont au moins une surface de frein étant revêtue d'une couche de protection contre l'usure selon au moins l'une quelconque des revendications 1 ou 2, **caractérisé en ce qu'**une couche intermédiaire, en particulier à base d'un alliage Ni, est disposée entre le corps de base de frein à disque et la couche de protection contre l'usure.

4. Procédé de fabrication d'un frein à disque, dont l'au moins une surface de frein est revêtue d'une couche de protection contre l'usure selon au moins l'une quelconque des revendications 1 à 3, comprenant les étapes consistant à
- fabriquer un corps de base de disque de frein,
- rendre rugueuse la surface de frein revêtue,
- appliquer la couche de protection contre l'usure constituée d'une composition d'alliage de fer selon au moins l'une quelconque des revendications 1 à 3, sur la surface de frein rendue rugueuse au moyen d'un procédé de projection thermique,
- réaliser un post-traitement thermique et/ou mécanique de la couche de protection contre l'usure afin d'améliorer la ductilité
par
le post-traitement mécanique et/ou thermique suivant comprenant
- le martelage ou laminage du revêtement, de préférence à des températures dans une plage comprise entre 800 et 950°C, de préférence entre 850 et 900°C, et/ou
- un déplacement consécutif à une température comprise entre 850°C et 950°C, de préférence à 900°C, sur une plage de temps comprise entre 0,5 et 3 heures, de préférence 1 heure.

5. Procédé selon la revendication 4,
- le corps de base de disque de frein étant fabriqué en fonte gris ou en fonte d'aluminium,
- la rugosité étant produite au moyen de jets de particules, de jets d'eau haute pression ou au moyen d'un outil de coupe produisant des dépouilles ;
- le procédé de projection thermique étant sélectionné parmi les procédés de projection plasma atmosphérique (APS), de projection à la flamme, de projection à la flamme haute vitesse ou de projection au fil à l'arc électrique, la protection plasma atmosphérique étant préférée lorsque la composition d'alliage de fer se présente sous la forme de poudre, et la projection au fil à l'arc électrique est préférée lorsque la composition d'alliage de fer se présente sous la forme de fil.
